# EUROPÄISCHE PATENTSCHRIFT

(11) **EP 0 764 557 B1**
(45) Veröffentlichungstag und Bekanntmachung des Hinweises auf die Patenterteilung: **22.11.2000**
(21) Anmeldenummer: 96111468.3
(22) Anmeldetag: 16.07.1996
(51) Int. Cl.: B60N 2/48, B60J 3/02, B60N 3/02

(54) **Neigeverstellbares Ausstattungsteil für Kraftfahrzeuge, wie Kopfstütze für Kraftfahrzeugsitze**
Inclination adjustable equipment element for automotive vehicles, such as headrests for car seats
Elément d'équipement, réglable en inclinaison, pour véhicules automobiles, tel qu'appui-tête pour sièges de voitures

(30) Priorität: 20.09.1995 DE 19534803
(43) Veröffentlichungstag der Anmeldung: 26.03.1997
(73) Patentinhaber: GRAMMER Automotive GmbH, 92224 Amberg (DE)
(72) Erfinder: Pausch, Friedhelm, Dipl.-Ing., 42697 Solingen (DE); Kurschildgen, Jürgen, 40764 Langenfeld (DE)
(74) Vertreter: Patentanwälte Ostriga & Sonnet

(56) Entgegenhaltungen:
- EP-A- 0 090 157
- DE-A- 3 120 892
- DE-A- 3 339 361
- DE-U- 29 509 387
- FR-A- 2 450 709
- US-A- 4 070 054
- US-A- 4 991 907
- US-A- 5 139 303

## Beschreibung

Die Erfindung betrifft ein neigeverstellbares Ausstattungsteil für Kraftfahrzeuge, wie Kopfstütze für Kraftfahrzeugsitze od.dgl., entsprechend dem Oberbegriff des Anspruchs 1.

Ein solches Ausstattungsteil in Form einer Sonnenblende ist durch die EP-PS 00 90 157 bekanntgeworden. Die bekannte Sonnenblende wird als nachteilig empfunden, weil die Klemmschenkel der Federklemmschelle sich bei der Neigeverstellung in einem bestimmten Drehsinn translatorisch in Längsrichtung zueinander bewegen, womit ein Öffnen oder Schließen des schlitzrohrförmigen Bereichs einhergeht, was mit der nachteiligen Folge ungleich großer Hemmomente verbunden ist.

Kopfstützen der hier interessierenden Art sind auch durch die DE-PS 33 39 361 sowie durch die 31 20 892 bekanntgeworden.

Beim Gegenstand der DE-PS 31 20 892 ist beabsichtigt, die Federrückstellkraft einer Kunststoffschelle einer Kopfstützen-Neigeverstelleinrichtung durch eine in die Kunststoffschelle eingelagerte Schelle aus bandförmigem Metall zu bessern. Insbesondere soll bei der bekannten Kopfstütze bei hohen Temperaturen die einmal eingestellte Reibungshemmung im wesentlichen aufrechterhalten bleiben. Bei der Neigeverstelleinrichtung gemäß der DE-PS 31 20 892 wirken als Reibungspaare Kunststoff (Schelle) auf Metall (Kopfpolstertragstange).

Gemäß der DE-PS 33 39 361 ist anstelle einer Kunststofflagerschelle ein klemmschellenartiges Bauteil aus Federstahl vorgesehen, dessen Befestigungsschenkel über einen Quersteg einstückig miteinander verbunden sind. Der teilkreisförmig ausgebildete Klemmbereich besteht aus zwei Klemmbacken mit aufeinanderzu weisenden freien Schenkelenden, wobei beide Klemmbacken Gegenrasten bilden, die mit Rastrippen eines Lagerzapfens zusammenwirken.

Ausgehend von dem Ausstattungsteil für Kraftfahrzeuge gemäß der EP-PS 00 90 157, liegt der Erfindung die Aufgabe zugrunde, das bekannte Ausstattungsteil, insbesondere eine Kopfstütze für Kraftfahrzeugsitze, hinsichtlich der Neigeverstelleinreichtung so weiterzuentwickeln, daß letztere unabhängig von äußeren Einflüssen, wie z.B. von der Außentemperatur, und unabhängig vom Drehsinn der Neigeverstellung möglichst angenähert gleiche Hemmomente erzeugt und außerdem eine wesentliche Montageerleichterung gestattet.

Entsprechend der Erfindung wird diese Aufgabe dadurch gelöst, daß sich die Längsachse der Zungenwurzel der Haltezunge im wesentlichen parallel zur Längsrichtung des zugehörigen Klemmschenkels erstreckt, wobei die in die Halteaussparung eingreifende Haltezunge einen eine Relativbewegung beider Klemmschenkel in Richtung ihrer Längsachsen verhindernden Querriegel bildet.

Entsprechend der Erfindung dient die Haltezunge als Querriegel, der eine Relativbewegung beider Klemmschenkel in Richtung ihrer Längsachsen verhindert. Dadurch, daß sich die Längsachse der Zungenwurzel der Haltezunge im wesentlichen in Längsrichtung des zugehörigen Klemmschenkels erstreckt, weisen die beiden Schmalflächen der Haltezunge in Richtung der jeweils zu verhindernden Relativbewegung, d.h. die Haltezunge setzt einer etwaigen Relativbewegung beider Klemmschenkel ihr größtes Widerstandsmoment entgegen. Dazu gehört auch, daß zwischen der Halteaussparung und der Haltezunge in beiden möglichen Relativbewegungsrichtungen ein im wesentlichen spielfreier satter Formschluß vorhanden ist.

In weiterer Ausgestaltung der Erfindung vollführt die Haltezunge beim Einführen in die korrespondierende Halteaussparung eine Schwenkbewegung entgegen der eigenen Federrückstellkraft um ihre Zungenwurzel herum. Die während des Einführens der Haltezunge in die Halteaussparung hinein zu überwindende Federrückstellkraft kann entsprechend der Erfindung als Rastkraft benutzt werden, die ein Lösen eines zwischen Haltezunge und Halteaussparung vorhandenen Formschlusses, der die Federklemmschelle in ihrer angespannten Lage hält, erschwert oder verhindert.

Entsprechend einer anderen Erfindungsvariante wird die Anspannung bei der Montage der erfindungsgemäßen Federklemmschelle auf der raumfesten Achse dadurch erleichtert, daß das freie Ende der Haltezunge eine mit einer Kante der Halteaussparung zusammenwirkende rampenartige Einführschräge bildet.

Eine andere zweckmäßige erfindungsgemäße Ausführungsform besteht darin, daß die rampenartige Einführschräge von einem etwa widerhakenartigen Rastteil gebildet ist. Das widerhakenartige Rastteil verrastet zweckmäßig nach Durchtritt durch die korrespondierende Halteaussparung hinter letzterer.

Entsprechend einer ersten Ausführungsvariante kann der zur Verhinderung einer Relativbewegung beider Klemmschenkel zueinander wichtige spielfreie satte Formschluß zwischen Halteaussparung und Haltezunge dadurch bewirkt werden, daß beide einander gegenüberliegenden, sich in Längsrichtung der Haltezunge erstreckenden Schmalflächen der Haltezunge an einander diametral gegenüberliegenden, quer zur Längsrichtung des Klemmschenkels angeordneten Laibungsbereichen der Halteaussparung anliegen.

Die zweite Erfindungsvariante zur Herstellung des vorteilhaften spielfreien Formschlusses zwischen Haltezunge und Halteaussparung besteht darin, daß die Halteaussparung an einer Längsseite einen in die Halteaussparung hinein vorragenden zungenartigen Riegelvorsprung bildet, welcher in eine ihm zugeordnete haltezungenseitige Riegelaussparung verrastend eingreift. Zweckmäßig greift der zungenartige Riegelvorsprung satt in die haltezungenseitige Riegelaussparung ein.

Die Erfindung gestattet eine unterschiedliche Anordnung einer oder mehrerer Halteaussparungen am jeweiligen Klemmschenkel. Eine grundsätzliche Ausführungsform besteht darin, daß die Halteaussparung eine zu einem Längsrand eines Klemmschenkels offene, etwa C-förmig begrenzte Aussparung darstellt. Gemäß einer anderen erfindungsgemäßen Ausführungsform stellt die Halteaussparung eine allseitig geschlossene Aussparung dar.

Auch sieht die Erfindung vor, daß die Federklemmschelle zwei Haltezungen und zwei mit diesen korrespondierende Halteaussparungen aufweist.

Nach einer ersten Ausführungsvariante besitzt der eine Klemmschenkel zwei Haltezungen und der andere Klemmschenkel zwei Halteaussparungen.

Eine zweite Ausführungsvariante besteht darin, daß jeder der beiden Klemmschenkel eine Haltezunge und eine Halteaussparung aufweist.

Zur Erzielung gleicher Reibungs- bzw. Klemmverhältnisse zwischen Federklemmschelle und raumfester Achse ist es wichtig, daß jede Haltezunge und jede Halteaussparung symmetrisch zur Längsmittelachse der Federklemmschelle angeordnet sind.

Die neue Kopfstütze ist anhand bevorzugter Ausführungsbeispiele näher dargestellt, hierbei zeigt
Fig. 1 einen Längsschnitt durch eine Kopfstütze,
Fig. 2 einen Querschnitt durch eine Kopfstütze entsprechend der Schnittlinie II-II in Fig. 1,

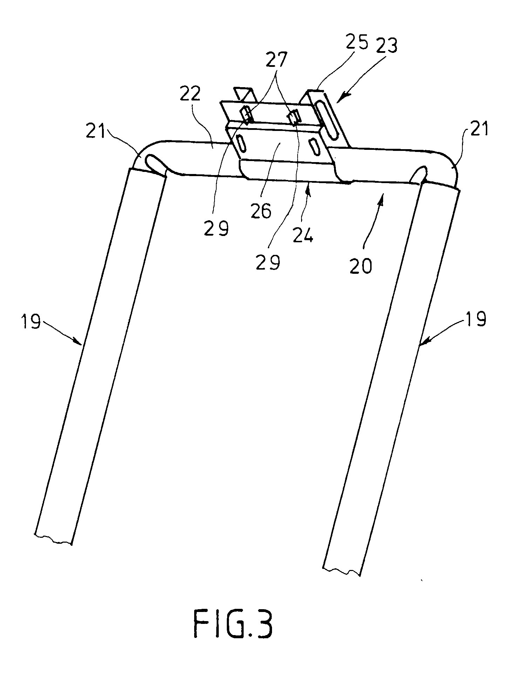

Fig. 3 eine U-förmige Haltestange mit einer Federklemmschelle in Alleindarstellung,
Fig. 4 eine vergrößerte Ansicht einer Federklemmschelle,
Fig. 5 eine Draufsicht der Federklemmschelle entsprechend der mit V bezeichneten Blickrichtung in Fig. 4,
Fig. 6 eine stirnseitige Ansicht der Federklemmschelle entsprechend dem in Fig. 4 mit VI bezeichneten Ansichtspfeil,
Fig. 7 etwa in Anlehnung an die Darstellung gemäß Fig. 6 die stirnseitige Ansicht einer Federklemmschelle abgewandelter Ausführungsform,
Fig. 8 eine Seitenansicht entsprechend dem mit VIII bezeichneten Ansichtspfeil in Fig. 7,
Fig. 9 eine Seitenansicht entsprechend dem in Fig. 7 mit IX bezeichneten Ansichtspfeil,
Fig. 10 eine raumfeste Achse im Querschnitt mit einer sie im Klemmschluß umschlingenden, im gespannten Zustand verriegelten Federklemmschelle entsprechend der in den Fig. 7 bis 9 gezeigten Ausführungsform und
Fig. 11 eine Draufsicht bei Weglassung der raumfesten Achse entsprechend dem in Fig. 10 mit XI bezeichneten Ansichtspfeil.

In den Zeichnungen ist die Kopfstütze insgesamt mit der Bezugsziffer 10 bezeichnet.

Die Kopfstütze 10 weist einen Polsterträger 11, bestehend aus zwei Schalen 12, 13 auf, welche an den Raststellen 14, 15 vorzugsweise unlösbar miteinander verrastet oder auch auf andere Art und Weise miteinander verbunden sind, wie z.B. durch Schweißung.

Der Polsterträger 11 ist umgeben von einem Polsterkörper 16, welcher von einem Bezug 17 umschlossen ist, dessen freie Ränder bei 18 miteinander verriegelt sind.

Zwei in einer nicht dargestellten Sitzlehne angeordnete Tragstangen 19 sind mittels eines U-förmigen Jochbügels 20 fest miteinander verbunden. Der Jochbügel 20 weist zwei Schenkelenden 21 sowie einen Jochsteg 22 auf. Der Jochsteg 22 besitzt einen im wesentlichen kreisförmigen Querschnitt.

In seinem mittleren Bereich ist der Jochsteg 22 von einer Federklemmschelle 23 aus Federstahl umgriffen, welche einen etwa schlitzrohrförmigen Bereich 24 und zwei sich daran anschließende Klemmschenkel 25, 26 aufweist. Die Klemmschenkel 25, 26 sind in zusammengeführter Spannstellung an mindestens einer Raststelle 27 formschlüssig miteinander verrastet.

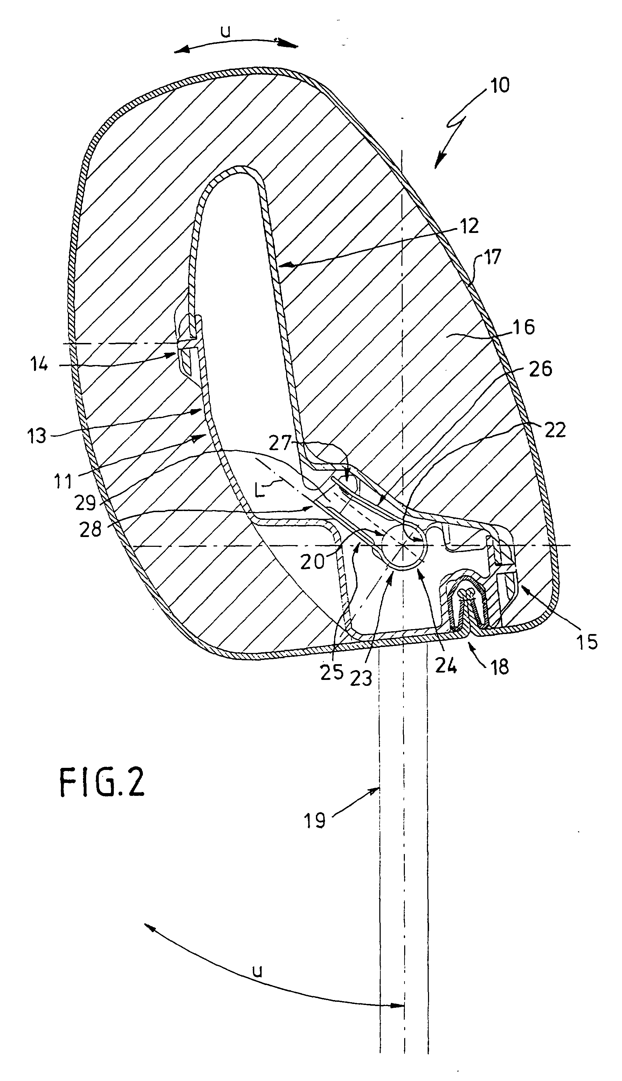

Wie insbesondere aus Fig. 2 hervorgeht, umschließt der schlitzrohrförmige Bereich 24 der Federklemmschelle 23 den Jochsteg 22 mit Klemmschluß.

Dabei ist die aus Fig. 2 ersichtliche Spannstellung so gewählt, daß bei einer Neigeverstellung etwa entlang dem Doppelpfeil u ein hinreichend großes und unabhängig von der Neigeverstellrichtung im wesentlichen gleiches Hemmoment zur Verfügung steht. Der Jochsteg 22 besteht aus Stahl, z.B. aus einem Stahlrohr, welches hinsichtlich seiner Festigkeit und/oder seiner Wandstärke und übriger Dimensionen so abgestimmt ist, daß es den von der Federklemmschelle 23 aufgebrachten Normalkräften formbeständig widersteht.

Weiterhin soll die Federklemmschelle 23 so ausgebildet sein, daß sich, gleich in welcher Drehrichtung die Neigeverstellung erfolgt, nach Möglichkeit keine oder nur eine ganz geringe translatorische Relativbewegung beider Klemmschenkel 25, 26 etwa radial zum Jochsteg 22 einstellen kann. Mit einer zu vermeidenden translatorischen Relativbewegung der beiden Klemmschenkel 25, 26 zueinander ginge ansonsten, je nach Drehsinn, ein Öffnen oder Schließen des schlitzrohrförmigen Bereichs 24 einher, mit der nachteiligen Folge ungleich großer Hemmomente.

Ergänzend sei noch erwähnt, daß die Klemmfederschelle 23 durch Ausbildung eines besonderen Aufnahmeraums 28 im Polsterträger 11 formschlüssig und nach allen Seiten verschiebungssicher in letzterem gehalten ist, so daß eine Bewegungseinheitlichkeit zwischen dem Polsterträger 11 und der Federklemmschelle 23 gegeben ist.

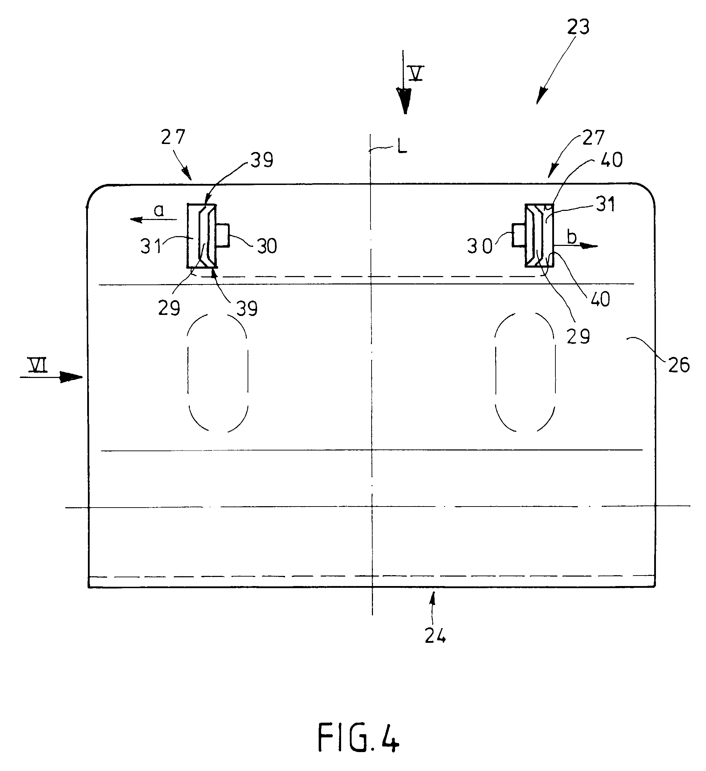

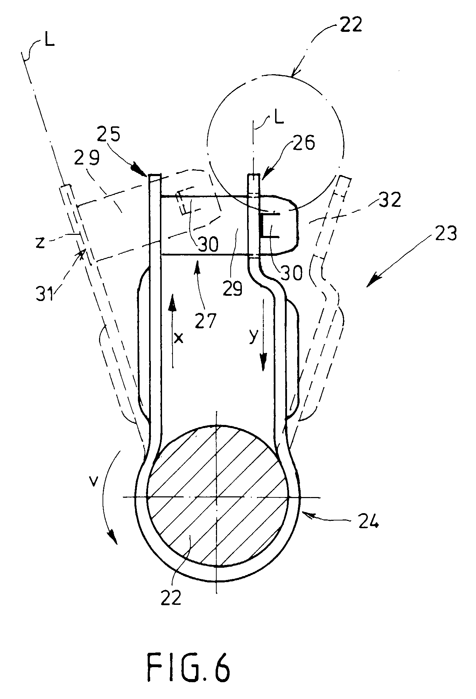

Eine besonders vorteilhafte Ausführungsform der Federklemmschelle 23 ist aus den Fig. 4, 5 und 6 ersichtlich. Durch besondere Ausbildung der zugleich als Spannstellen dienenden Raststellen 27 wird nämlich verhindert, daß die vorbezeichnete translatorische entgegengerichtete Relativverschiebung zwischen den beiden Klemmschenkeln 25, 26 stattfindet. Anhand von Fig. 6 ist vorstellbar, wie dies abläuft:

Wenn der Polsterträger 11 gemeinsam mit der Federklemmschelle 23 in Drehrichtung v geneigt wird, versuchen die beiden Klemmschenkel 25, 26, eine entgegengerichtete Relativverschiebung in Richtung x bzw. y auszuführen, werden hierbei jedoch durch die besondere Ausbildung der jeweiligen Raststelle 27 daran gehindert.

Und zwar weist die Federklemmschelle 23 zwei Raststellen 27 auf, die wie folgt ausgebildet sind: Aus dem Klemmschenkel 25 sind zwei sich etwa in Umfangsrichtung des schlitzrohrförmigen Bereichs 24 erstreckende Rastzungen bzw. Haltezungen 29 jeweils um ihre Zungenwurzel 33 abgebogen. Die Längsachse z jeder Zungenwurzel 33 erstreckt sich in Längsrichtung L des Klemmschenkels 25.

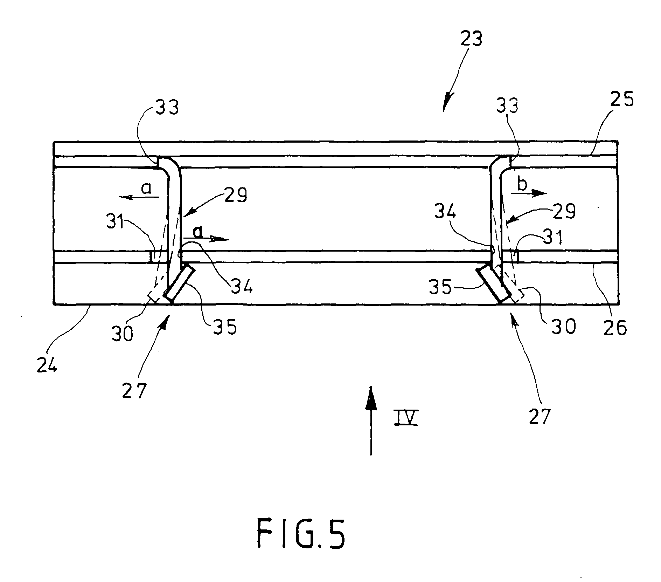

Die Haltezungen 29 sind an ihren freien Enden mit widerhakenartigen Ausstellungen 30 versehen. Mit den Haltezungen 29 des Schenkels 25 wirken Rastlöcher bzw. Halteaussparungen 31 des Schenkels 26 zusammen. Je Haltezunge 29 vollführt beim Einführen in die zungenartige Halteaussparung 31 eine Schwenkbewegung in Richtung a oder in Richtung b um die Längsachse z ihrer Zungenwurzel 33 entgegen der eigenen Rückstellkraft (gestrichtelte Darstellung in Fig. 5). Dabei bilden die widerhakenartigen Ausstellungen 30 beim Einrasten in die Halteaussparung 31 mit den Kanten 34 der Halteaussparung 31 zusammenwirkende rampenartige Einführungsschrägen 35.

Die in Fig. 6 gestrichelt gezeigte entspannte Offenstellung der Federklemmschelle 23 ist dergestalt, daß der ebenfalls gestrichelt dargestellte Querschnitt des Jochstegs 22 ohne weiteres in die V-förmige Öffnung 32 eingefügt werden kann.

Das Spannen der Federklemmschelle 23 verläuft im Einklang mit den vorstehenden Ausführungen im Hinblick auf die Fig. 5 und 6 wie folgt:

Nachdem der Jochsteg 22 durch die V-förmige Öffnung 32 der entspannten Schelle 23 hindurch bis in den Innenraum des schlitzrohrförmigen Bereichs 24 eingefügt ist, werden beide Klemmschenkel 25, 26 mittels einer geeigneten Spannvorrichtung aufeinanderzu bewegt. Hierbei werden die beiden Haltezungen 29 zunächst entgegen ihrer eigenen Federrückstellkraft voneinander weg nach außen gespreizt und schnappen dann in ihre entspannte Ursprungslage zurück, wenn sie die Rastlöcher 31 mit den etwa wie Aufgleiskörper (bei 35) wirkenden Ausstellungen 30 durchdrungen haben.

Bei Betrachtung der Fig. 4-6 wird deutlich, daß die Haltezungen 29 gemeinsam mit den Halteaussparungen bzw. Rastlöchern 31 wie Querriegel wirken, welche die vorbezeichnete Relativbewegung entlang der entgegengerichteten Bewegungspfeile x und y weitestgehend verhindern, so daß bei einer Neigungsverstellung - gleich in welcher Umfangsrichtung entsprechend dem Doppelpfeil u - stets ein im wesentlichen gleiches Hemmoment verfügbar ist.

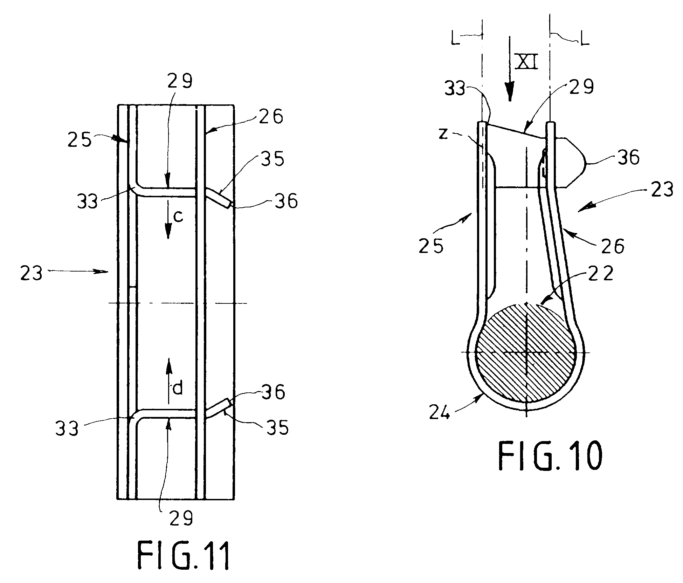

Mit der erfindungsgemäßen Federklemmschelle 23 würde insbesondere eine nachteilige Relativbewegung der Schenkel 25, 26 vermieden, wenn man beispielsweise eine zu einem anderen Zweck gedachte Rastfeder gemäß dem DE-GM 91 07 485 (s. dort die Fig. 10 und 11) oder ein ähnliches Prinzip anwenden würde. Eine derartige bekannte Federanordnung ließe sich nur dann im Sinne der Erfindung verwenden, wenn man mehrere Raststellen verwenden würde, deren Rastrichtung einander entgegengesetzt wäre.

So würden beispielsweise zwei wechselseitig auf beide Schenkel verteilte Raststellen in entgegengesetzter Richtung einrasten. Mit einer solchen Anordnung würde die vorerwähnte Relativbewegung jedenfalls zu einem Teil unterdrückt, wenngleich nicht vermieden. Immerhin würde mit einer derartigen Anordnung nicht die volle Wirkung der Federklemmschelle 23 entsprechend den Fig. 4-6 erreicht.

Besonders vorteilhaft sind indessen jene erfindungsgemäßen Ausführungsformen, bei denen bei geschlossener Federklemmschelle 23 mindestens eine Raststelle 27 als Querriegel, d.h. quer zur Längserstreckung der Schenkel 25, 26, auf letztere wirkt, um eine Relativbewegung (entsprechend den Pfeilen x, y) der Schenkel 25, 26 in deren Längsrichtung zu unterbinden. Eine solche Querverriegelung kann auch durch eine Stoffschlußverbindung, z.B. durch Punktschweißung, bewirkt werden.

Mit der Erfindung werden auch die Nachteile vermieden, welche sich mit einer Kopfstütze gemäß der DE-OS 43 28 054 verbinden. Bei jener bekannten Kopfstütze wird nämlich der Klemmspannungszustand der Bandstahl-Federklammer nur durch gesonderte äußere Zuhaltungsbereiche des aus Kunststoff bestehenden Polsterträgers erreicht. Jene Zuhaltungsbereiche aus Kunststoff neigen bekanntlich zum Kriechen, womit zwangsläufig ein Nachlassen der Klemmspannung einhergeht.

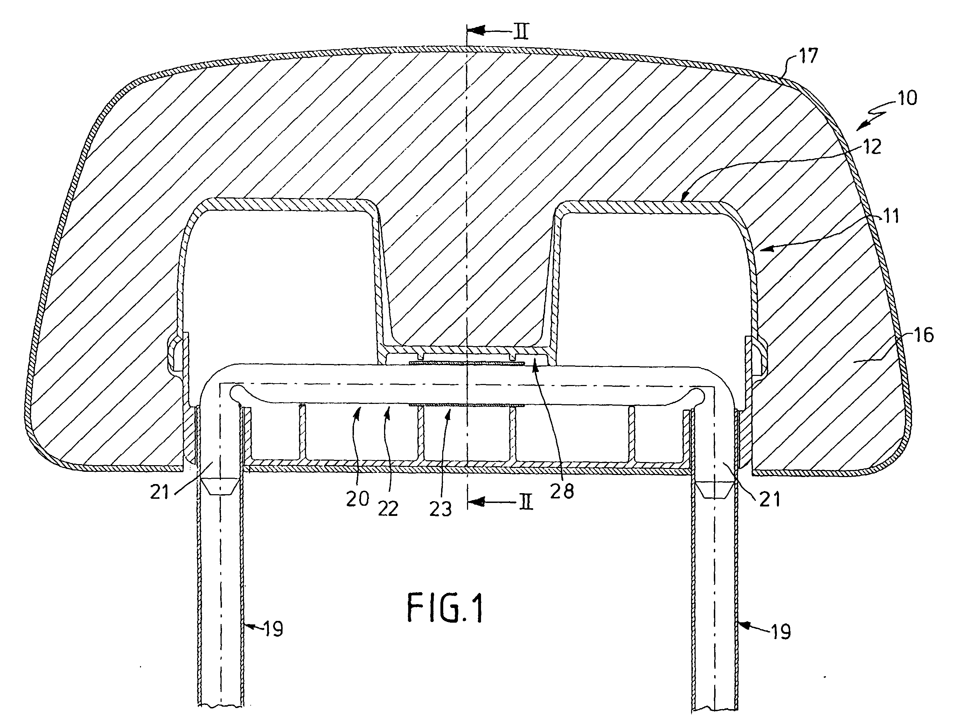

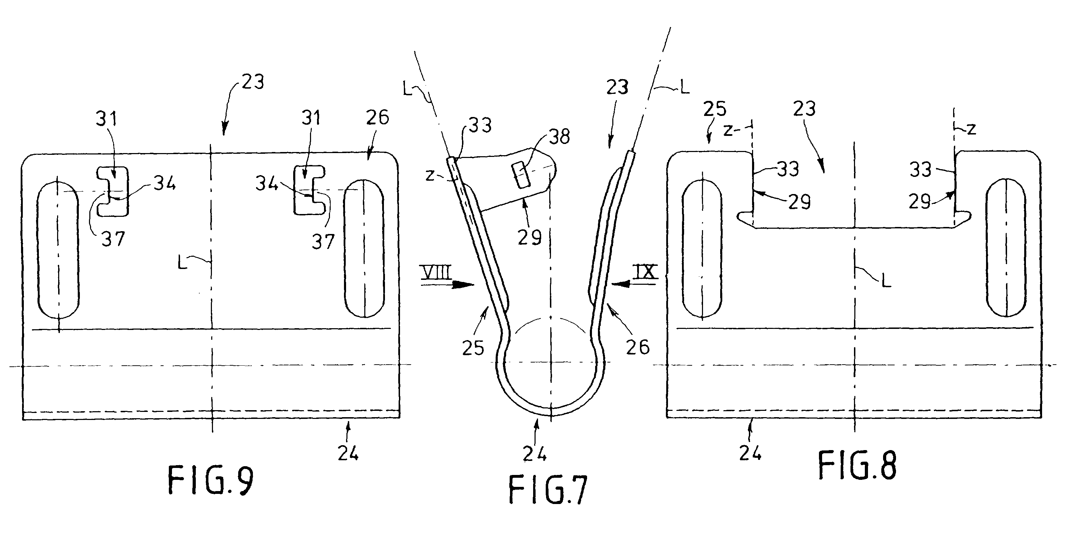

Die in den Fig. 7-11 dargestellte Ausführungsvariante einer Federklemmschelle 23 unterscheidet sich von der Federklemmschelle 23, die im Zusammenhang mit den Fig. 1 und 2 sowie 4-6 beschrieben ist, nur durch die Ausbildung der Haltezunge 29 und der Halteaussparungen 31.

So befinden sich die rampenartigen Einführschrägen 35 benachbart der vorderen Enden 36 der Haltezungen 29. Hierbei sind die rampenartigen Einführschrägen 35 durch Abwinklungen der vorderen Bereiche der Haltezungen 29 gebildet. Die rampenartigen Einführschrägen 35 sind derart an den Haltezungen 29 angeordnet, daß diese in den Richtungen c und d um ihre jeweilige Zungenwurzel 33 herum entgegen der eigenen Federrückstellkraft verschwenkt werden. Die mit den rampenartigen Einführschrägen zusammenwirkenden Kanten der Halteaussparungen 31 werden durch die freien Kanten 34 von in die Halteaussparungen 31 vorragenden zungenartigen Riegelvorsprüngen 37 gebildet.

Die Verrastung zwischen Haltezungen 29 und Halteaussparungen 31 geschieht dabei derart, daß jeder zungenartige Riegelvorsprung 37 satt in eine haltezungenartige Riegelaussparung 38 eingreift. Durch dieses satte Eingreifen der zungenartigen Riegelvorsprünge 37 in die haltezungenseitigen Riegelaussparungen 38 wird eine Relativbewegung entlang der Bewegungspfeile x und y der beiden Klemmschenkel 25, 26 zueinander verhindert.

In diesem Zusammenhang ist es wichtig, daß bei den in den Fig. 4-6 dargestellten Federklemmschellen 23 jeweils beide einander diametral gegenüberliegenden, sich in Längsrichtung der jeweiligen Haltezungen 29 erstreckenden Schmalflächen 39 satt an den ebenfalls einander diametral gegenüberliegenden, quer zur Längsrichtung L des Klemmschenkels 26 angeordneten Laibungsbereichen 40 der Halteaussparung 31 anliegen.

## Patentansprüche

1. Neigeverstellbares Ausstattungsteil für Kraftfahrzeuge, wie Kopfstütze (10) für Kraftfahrzeugsitze od.dgl., mit einem um eine raumfeste Achse (22) neigeverstellbaren Polsterträger (11), in welchem eine Federklemmschelle (23) aus Federstahlblech festgelegt ist, die einen die raumfeste Achse (22) mit Klemmschluß umgreifenden schlitzrohrartigen Bereich (24) aufweist, der an seinen beiden Enden in je einen Klemmschenkel (25, 26) übergeht, von denen ein Klemmschenkel (25) an seinem freien Endbereich mindestens eine um eine Zungenwurzel (33) abgewinkelte Haltezunge (29) aufweist, welche bei Anspannung der beiden einander angenäherten Klemmschenkel (25, 26) in eine korrespondierende Halteaussparung (31) im anderen Klemmschenkel (26), beide Klemmschenkel (25, 26) miteinander verrastend, eingreift, dadurch gekennzeichnet, daß sich die Längsachse (z) der Zungenwurzel (33) der Haltezunge (29) im wesentlichen parallel zur Längsrichtung (L) des zugehörigen Klemmschenkels (25) erstreckt, wobei die in die Halteaussparung (31) eingreifende Haltezunge (29) einen eine Relativbewegung (bei x, y) beider Klemmschenkel (25, 26) in Richtung ihrer Längsachsen (L) verhindernden Querriegel bildet.

2. Neigeverstellbares Ausstattungsteil nach Anspruch 1, dadurch gekennzeichnet, daß die Haltezunge (29) beim Einführen in die korrespondierende Halteaussparung (31) eine Schwenkbewegung entgegen Federrückstellkraft um ihre Zungenwurzel (33) herum vollführt.

3. Neigeverstellbares Ausstattungsteil nach Anspruch 1 oder nach Anspruch 2, dadurch gekennzeichnet, daß das freie Ende (36) der Haltezunge (29) eine mit einer Kante (34) der Halteaussparung (31) zusammenwirkende rampenartige Einführschräge (35) bildet.

4. Neigeverstellbares Ausstattungsteil nach Anspruch 3, dadurch gekennzeichnet, daß die rampenartige Einführschräge (35) von einem etwa widerhakenartigen Rastteil (30) gebildet ist.

5. Neigeverstellbares Ausstattungsteil nach Anspruch 4, dadurch gekennzeichnet, daß das widerhakenartige Rastteil (30) nach Durchtritt durch die korrespondierende Halteaussparung (31) hinter letzterer verrastet.

6. Neigeverstellbares Ausstattungsteil nach einem der Ansprüche 1 bis 5, dadurch gekennzeichnet, daß beide einander diametral gegenüberliegenden, sich in Längsrichtung der Haltezunge (29) erstreckenden Schmalflächen (39) der Haltezunge (29) an einander diametral gegenüberliegenden, quer zur Längsrichtung (L) des Klemmschenkels (26) angeordneten Laibungsbereichen (40) der Halteaussparung (31) anliegen.

7. Neigeverstellbares Ausstattungsteil nach einem der Ansprüche 1 bis 3, dadurch gekennzeichnet, daß die Halteaussparung (31) an einer Längsseite einen in die Halteaussparung (31) hinein vorragenden zungenartigen Riegelvorsprung (37) bildet, welcher in eine ihm zugeordnete haltezungenseitige Riegelaussparung (38) verrastend eingreift.

8. Neigeverstellbares Ausstattungsteil nach Anspruch 7, dadurch gekennzeichnet, daß der zungenartige Riegelvorsprung (37) satt in die haltezungenseitige Riegelaussparung (38) eingreift.

9. Neigeverstellbares Ausstattungsteil nach einem der Ansprüche 1 bis 8, dadurch gekennzeichnet, daß die Halteaussparung (31) eine zu einem Längsrand eines Klemmschenkels (26) hin offene, etwa C-förmig begrenzte Aussparung darstellt.

10. Neigeverstellbares Ausstattungsteil nach einem der Ansprüche 1 bis 8, dadurch gekennzeichnet, daß die Halteaussparung (31) eine allseitig geschlossene Aussparung darstellt.

11. Neigeverstellbares Ausstattungsteil nach einem der Ansprüche 1 bis 10, dadurch gekennzeichnet, daß die Federklemmschelle (23) zwei Haltezungen (29) und zwei mit diesen korrespondierende Halteaussparungen (31) aufweist.

12. Neigeverstellbares Ausstattungsteil nach Anspruch 11, dadurch gekennzeichnet, daß der eine Klemmschenkel (25) zwei Haltezungen (29) und der andere Klemmschenkel (26) zwei Halteaussparungen (31) aufweist.

13. Neigeverstellbares Ausstattungsteil nach Anspruch 11, dadurch gekennzeichnet, daß jeder der beiden Klemmschenkel (25, 26) eine Haltezunge (29) und eine Halteaussparung (31) aufweist.

14. Neigeverstellbares Ausstattungsteil nach einem der Ansprüche 1 bis 13, dadurch gekennzeichnet, daß jede Haltezunge (29) und jede Halteaussparung (31) symmetrisch zur Längsmittelachse der Federklemmschelle (23) angeordnet sind.

## Claims

1. Tilt-adjustable fitting for motor vehicles, such as a headrest (10) for motor vehicle seats or similar, with an upholstery support (11), the tilt of which can be adjusted about a space-fixed shaft (22) and in which a spring clip (23) of spring steel sheet is fixed, which clip comprises a slotted tubular region (24) which embraces the space-fixed shaft (22) with a clamping fit and passes at its two ends into a respective clamping leg (25, 26), one clamping leg (25) of which comprises at its free end region at least one retaining tongue (29) which is bent at an angle about a tongue root (33) and engages in a corresponding retaining recess (31) in the other clamping leg (26) when the two clamping legs (25, 26), having been brought together, are tensioned, characterised in that the longitudinal axis (z) of the tongue root (33) of the retaining tongue (29) extends substantially parallel to the longitudinal direction (L) of the associated clamping leg (25), wherein the retaining tongue (29) engaging in the retaining recess (31) forms a cross latch preventing a relative movement (at x, y) of the two clamping legs (25, 26) in the direction of their longitudinal axes (L).

2. Tilt-adjustable fitting according to Claim 1, characterised in that the retaining tongue (29) executes a pivotal movement about its tongue root (33) against spring return force when introduced into the corresponding retaining recess (31).

3. Tilt-adjustable fitting according to Claim 1 or 2, characterised in that the free end (36) of the retaining tongue (29) forms a ramp-like lead-in cant (35) co-operating with an edge (34) of the retaining recess (31).

4. Tilt-adjustable fitting according to Claim 3, characterised in that the ramp-like lead-in cant (35) is formed by an approximately barb-like locking part (30).

5. Tilt-adjustable fitting according to Claim 4, characterised in that the barb-like locking part (30) locks behind the corresponding retaining recess (31) after passing through the latter.

6. Tilt-adjustable fitting according to any one of Claims 1 to 5, characterised in that the two narrow faces (39) of the retaining tongue (29), which lie diametrically opposite one another and extend in the longitudinal direction of the retaining tongue (29), lie against intrados regions (40) of the retaining recess (31) which lie diametrically opposite one another and are disposed transversely to the longitudinal direction (L) of the clamping leg (26).

7. Tilt-adjustable fitting according to any one of Claims 1 to 3, characterised in that the retaining recess (31) forms at one longitudinal side a tongue-like latch projection (37) which projects into the retaining recess (31) and engages with a locking effect in a latch recess (38), on the retaining tongue side, which is associated with this projection.

8. Tilt-adjustable fitting according to Claim 7, characterised in that the tongue-like latch projection (37) engages snugly in the latch recess (38) on the retaining tongue side.

9. Tilt-adjustable fitting according to any one of Claims 1 to 8, characterised in that the retaining recess (31) represents a recess which is open towards a longitudinal edge of a clamping leg (26) and delimited approximately in the shape of a C.

10. Tilt-adjustable fitting according to any one of Claims 1 to 8, characterised in that the retaining recess (31) represents a recess which is closed all-round.

11. Tilt-adjustable fitting according to any one of Claims 1 to 10, characterised in that the spring clip (23) comprises two retaining tongues (29) and two retaining recesses (31) corresponding to these.

12. Tilt-adjustable fitting according to Claim 11, characterised in that one clamping leg (25) comprises two retaining tongues (29) and the other clamping leg (26) comprises two retaining recesses (31).

13. Tilt-adjustable fitting according to Claim 11, characterised in that each of the two clamping legs (25, 26) comprises a retaining tongue (29) and a retaining recess (31).

14. Tilt-adjustable fitting according to any one of Claims 1 to 13, characterised in that each retaining tongue (29) and each retaining recess (31) is disposed symmetrically about the longitudinal central axis of the spring clip (23).

## Revendications

1. Pièce d'équipement à inclinaison réglable pour des véhicules automobiles, tel qu'appui-tête (10) pour des sièges de véhicule automobile ou analogues, avec un support de rembourrage (11) réglable en inclinaison autour d'un axe (22) spatialement fixe, support de rembourrage dans lequel est fixé un collier de serrage élastique (23) constitué en tôle d'acier à ressort, qui présente une zone (24) du genre d'un tube fendu, entourant, avec une liaison à serrage, l'axe (22) spatialement fixe, zone se transformant, à chacune ses deux extrémités, en une branche de serrage (25, 26), parmi lesquelles une branche de serrage (25) présente, sur sa zone d'extrémité libre, au moins une languette de maintien (29) coudée autour d'une racine de languette (33) qui, lors de l'application avec serrage des deux branches de serrage (25, 26) ayant été approchées l'une de l'autre, s'engage, en provoquant un encliquettement ensemble des deux branches de serrage (25, 26), dans l'évidement de maintien (31) correspondant ménagé dans l'autre branche de serrage (26), caractérisée en ce que l'axe longitudinal (z) de la racine de languette (33) de la languette de maintien (29) s'étend sensiblement parallèlement à la direction longitudinale (L) de la branche de serrage (25) afférente, la languette de maintien (29) s'engageant dans l'évidement de maintien (31) constituant un verrou transversal empêchant tout déplacement relatif (en x, y) des deux branches de serrage (25, 26), dans la direction de leurs axes longitudinaux (L).

2. Pièce d'équipement à inclinaison réglable selon la revendication 1, caractérisée en ce que la languette de maintien (29), lors de l'insertion dans l'évidement de maintien (31) correspondant, effectue un mouvement de pivotement à l'encontre de la force de rappel élastique, autour de sa racine de languette (33).

3. Pièce d'équipement à inclinaison réglable selon la revendication 1 ou selon la revendication 2, caractérisée en ce que l'extrémité libre (36) de la languette de maintien (29) constitue une pente d'introduction (35) du genre d'une rampe, coopérant avec une arête (34) de l'évidement de maintien (31).

4. Pièce d'équipement à inclinaison réglable selon la revendication 3, caractérisée en ce que la pente d'introduction (35) du genre d'une rampe est constituée par une partie d'encliquetage (30) à peu près du genre d'un contre-crochet.

5. Pièce d'équipement à inclinaison réglable selon la revendication 4, caractérisée en ce que la pièce d'encliquetage (30) du genre d'un contre-crochet, après passage dans l'évidement de maintien (31) correspondant, s'encliquette derrière ce dernier.

6. Pièce d'équipement à inclinaison réglable selon l'une des revendications 1 à 5, caractérisée en ce que les deux faces étroites (39), diamétralement opposées l'une à l'autre, s'étendant dans la direction longitudinale de la languette de maintien (29), de cette languette de maintien (29), appuient sur des zones d'intrados (40), diamétralement opposées, disposées transversalement par rapport à la direction longitudinale (L) de la branche de serrage (26), de l'évidement de maintien (31).

7. Pièce d'équipement à inclinaison réglable selon l'une des revendications 1 à 3, caractérisée en ce que l'évidement de maintien (31) constitue, sur une face longitudinale, une saillie de verrouillage (37) du genre d'une languette, se projetant à l'intérieur de l'évidement de maintien (31), saillie s'engageant, avec un effet d'encliquetage, dans un évidement de verrouillage (38) lui étant associé, situé du côté de la languette de maintien.

8. Pièce d'équipement à inclinaison réglable selon la revendication 7, caractérisée en ce que la saillie de verrouillage (37) du genre d'une languette s'engage sur toute la surface dans l'évidement de verrouillage (38) situé du côté de la languette de maintien.

9. Pièce d'équipement à inclinaison réglable selon l'une des revendications 1 à 8, caractérisée en ce que l'évidement de maintien (31) constitue un évidement limité à peu près en forme de C, ouvert vers un bord longitudinal d'une branche de serrage (26).

10. Pièce d'équipement à inclinaison réglable selon l'une des revendications 1 à 8, caractérisée en ce que l'évidement de maintien (31) constitue un évidement fermé de tous côtés.

11. Pièce d'équipement à inclinaison réglable selon l'une des revendications 1 à 10, caractérisée en ce que le collier de serrage élastique (23) présente deux languettes de maintien (29) et deux évidements de maintien (31) leur correspondant.

12. Pièce d'équipement à inclinaison réglable selon la revendication 11, caractérisée en ce qu'une branche de serrage (25) présente deux languettes de maintien (29) et l'autre branche de serrage (26) présente deux évidements de maintien (31).

13. Pièce d'équipement à inclinaison réglable selon la revendication 11, caractérisée en ce que chacune des deux branches de serrage (25, 26) présente une languette de maintien (29) et un évidement de maintien (31).

14. Pièce d'équipement à inclinaison réglable selon l'une des revendications 1 à 13, caractérisée en ce que chaque languette de maintien (29) et chaque évidement de maintien (31) sont disposés symétriquement par rapport à l'axe médian longitudinal du collier de serrage élastique.
